# EUROPÄISCHE PATENTSCHRIFT

(11) **EP 0 873 677 B1**
(45) Veröffentlichungstag und Bekanntmachung des Hinweises auf die Patenterteilung: **02.07.2003**
(21) Anmeldenummer: 98104870.5
(22) Anmeldetag: 18.03.1998
(51) Int. Cl.: A01C 15/00, A01C 17/00

(54) **System zur Ermittlung des Nährstoffbedarfes**
System for calculating the fertiliser needs
Système pour déterminer les besoins d'engrais

(30) Priorität: 24.04.1997 DE 19717284
(43) Veröffentlichungstag der Anmeldung: 28.10.1998
(73) Patentinhaber: Amazonen-Werke H. Dreyer GmbH & Co. KG, 49205 Hasbergen (DE)
(72) Erfinder: Scheufler, Bernd, Dr. Dipl.-Ing., 49205 Hasbergen (DE); Marquering, Johannes, Dipl.-Ing., 49134 Wallenhorst-Rulle (DE)

(56) Entgegenhaltungen:
- EP-A- 0 191 287
- EP-A- 0 615 682
- US-A- 5 585 626

## Beschreibung

Die Erfindung betrifft ein System gemäß des Oberbegriffes des Patentanspruches 1.

Ein derartiges System ist in der DE-OS 40 16 603 beschrieben. Bei diesem System ist ein Sensorelement vorgesehen, welches den Nährstoffbedarf der aufgewachsenen Pflanzen und/oder der Nährstoffversorgung des Bodens ermittelt. Anhand dieser ermittelten Werte wird über den Bordcomputer in Verbindung mit der Verteilmaschine bestimmt, welche Menge Dünger an der entsprechenden Stelle auszubringen ist.

Der Erfindung liegt die Aufgabe zugrunde, sehr differenziert die Nährstoffversorgung des Bodens bzw. den Nährstoffbedarf der Pflanzen zu ermitteln.

Diese Aufgabe wird erfindungsgemäß dadurch gelöst, daß das System mehrere Sensorelemente aufweist, und daß für jeden zu ermittelnden Nährstoff ein eigener Sensor vorgesehen ist. Hierdurch ist es möglich, daß gezielt jeweils der Stickstoff-, der Phosphor- und Kalibedarf etc. einzeln ermittelbar ist. Aufgrund dieser differenzierten Nährstoffermittlung wird die Vorraussetzung dafür geschaffen, daß jeder Nährstoff in der erforderlichen Menge an der entsprechenden Stelle ausgebracht werden.

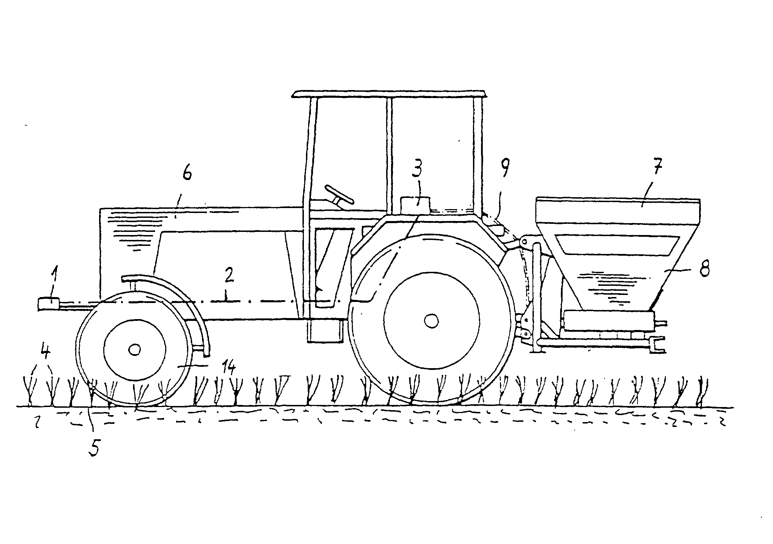

Weitere Einzelheiten der Erfindung sind der Beispielsbeschreibung und der Zeichnung zu entnehmen. Die Zeichnung zeigt
das erfindungsgemäße System in Prinzipdarstellung.

Das System zur Ermittlung des Nährstoffbedarfes besteht im wesentlichen aus den mehreren Sensorelementen, die in dem Gehäuse 1 angeordnet sind. In diesem Gehäuse sind jeweils ein Sensor zur Ermittlung des Stickstoffbedarfes, ein Sensor zur Ermittlung des Phosphorbedarfes und ein Sensor zur Ermittlung des Kalibedarfes angeordnet. Diese Sensoren sind über eine Leitung 2 mit einem Bordcomputer 3 verbunden. Der Bordcomputer 3 errechnet aus den von den Sensorelementen, die in dem Gehäuse 1 angeordnet sind, übermittelten Daten den jeweiligen Nährstoffbedarf der Pflanzen 4 bzw. den jeweiligen Nährstoffbedarf des Bodens 5. Das Gehäuse ist auf der Vorderseite eines Ackerschleppers 6 angeordnet. Auf der Rückseite des Ackerschleppers 6 ist die Verteilmaschine 7, die als Zentrifugaldüngerstreuer ausgebildet ist, an dem Dreipunktkraftheber des Schleppers 6 angeordnet. Der Zentrifugaldüngerstreuer 7 weist einen Vorratsbehälter 8, der in drei Kammern aufgeteilt ist, auf. In jeder Kammer befindet sich eine andere Nährstoffsorte. Jeder Kammer ist ein Dosierorgan zugeordnet. Diese Dosierorgane dosieren das Material in einstellbaren Mengen eigenen Verteilorganen oder einem Sammelelement zu, welches die dosierten Materialmengen einem Verteilorgan zuleiten. Die Dosierorgane sind über Leitungen 9 mit dem Bordcomputer 3 verbunden. Mittels des Bordcomputers 3 werden die Dosierorgane aufgrund der von den Sensorelementen, die in dem Gehäuse 1 angeordnet sind, gesteuert bzw. geregelt, so daß die erforderliche Düngermenge der jeweiligen Nährstoffsorte aufgrund des ermittelten Nährstoffbedarfes bzw. der Nährstoffversorgung des Bodens ausgebracht wird.

Es ist auch möglich, daß in einem separaten Arbeitsgang zunächst mittels der in dem Gehäuse 1 untergebrachten Sensorelemente der Nährstoffbedarf der Pflanzen bzw. die Nährstoffversorgung des Bodens ermittelt und in einem Speicher des Bordcomputers 3 oder auf einem anderen geeigneten Speichermedium abgespeichert wird. Diese ermittelten Daten werden dem Standort zugeordnet abgespeichert. Diese Standortbestimmung kann beispielsweise mittels eines DGPS-System erfolgen. Anhand der standortspezifisch ermittelten und abgespeicherten Daten kann dann in einem weiteren Arbeitsgang die jeweils erforderliche Düngerart und -sorte standortspezifisch ausgebracht werden.

## Patentansprüche

1. System zur Ermittlung des Nährstoffbedarfes der Pflanzen und/oder der Nährstoffversorgung des Bodens mittels Sensorelementen, die den Nährstoffbedarf der Pflanzen in Zusammenarbeit mit dem Bordcomputer (3) ermitteln, **dadurch gekennzeichnet, daß** das System mehrere Sensorelemente aufweist, daß für jeden zu ermittelnden Nährstoff ein eigener Sensor vorgesehen ist.

2. System nach Anspruch 1, **dadurch gekennzeichnet, daß** zumindest jeweils ein Sensor zur Ermittlung des Stickstoffbedarfes, des Phosphor- und/oder des Kalibedarfes vorhanden ist.

## Claims

1. System for determining the nutrient requirement of plants and/or the supply of nutrients for the soil by means of sensors which determine the nutrient requirement of plants in co-operation with the on-board computer (3), **characterised in that** the system includes a plurality of sensors, and **in that** one specific sensor is provided for each nutrient to be determined.

2. System according to claim 1, **characterised in that** at least one respective sensor is provided to determine the nitrogen requirement, the phosphorus requirement and/or the potassium requirement.

## Revendications

1. Système pour déterminer le besoin en engrais de plante et/ou celui du sol à l'aide de capteurs qui déterminent le besoin en engrais des plantes en coopérant avec l'ordinateur embarqué (3),
**caractérisé par**
un capteur spécifique associé à chaque engrais à déterminer.

2. Système selon la revendication 1,
**caractérisé en ce qu'**
au moins un capteur détermine le besoin en azote, un autre le besoin en phosphore et/ou le besoin en potasse.
